Europäisches Patentamt

European Patent Office

Office européen des brevets

(19)

(11) Veröffentlichungsnummer: **0 003 473**
**A1**

(12) # EUROPÄISCHE PATENTANMELDUNG

(21) Anmeldenummer: **78101647.2**

(22) Anmeldetag: **12.12.78**

(51) Int. Cl.²: **G 01 G 3/16,** G 01 L 1/10

(30) Priorität: **02.02.78 CH 1573/78**

(43) Veröffentlichungstag der Anmeldung: **22.08.79**
**Patentblatt 79/17**

(84) Benannte Vertragsstaaten: **BE DE FR GB IT NL SE**

(71) Anmelder: **WIRTH, GALLO & CO,**
**Sonnenbergstrasse 55, CH-8032 Zürich (CH)**

(72) Erfinder: **Saner, Kaspar, Buenstrasse 58, CH-8600**
**Dübendorf (CH)**

(54) **Massen- und Kraftmesser.**

(57) Massen- und Kraftmesser mit einem Gestell, einem Lastträger und einem zwei Dynamometer, eine Referenzgröße und einen Krafteingang aufweisenden Meßsystem, bei welchem zwischen dem Lastträger und dem Gestell eine Lastfeder (16) und zwischen dem Lastträger und dem Krafteingang des Meßsystems eine schwächere Meßfeder (15) angeordnet sind, so daß diese Federn kraftuntersetzende Hebelwerke in Massenmeßgeräten teilweise oder ganz ersetzen und, falls erwünscht, auch zur Linearisierung von nichtlinearen Kennlinien über ein großes Spektrum von Funktionen dienen können.

0003473

WIRTH, GALLO & Co                          8032 Zürich

---

### Massen- und Kraftmesser

---

Die vorliegende Erfindung bezieht sich auf einen Massen- und
Kraftmesser mit einem Gestell, einem Lastträger, eine Referenzgrösse und einem zwei Dynamometer und einen Krafteingang aufweisenden Mess-System, z.B. eine Saitenwaage. Die Referenzgrösse
kann das Gewicht einer Referenzmasse oder die Kraft einer Referenzfeder sein.

Geräte dieser Gattung sind bekannt, wobei sie in zwei Gruppen unterteilt werden können: In der einen Gruppe wirkt das Gewicht einer
Referenzmass auf eines der Dynamometer, das Gewicht des Wägegutes
oder die zu messende Kraft auf das andere; keine Kopplung der beiden Dynamometer ist vorhanden. In den meisten Fällen werden zwei
identische oder zumindest gleichartige Dynamometer verwendet. Die
Ermittlung der zu messenden Grösse, Masse oder Kraft, erfolgt über
einen Vergleich der elektrischen Ausgangsgrössen der Dynamometer,
womit die Abhängigkeit von der örtlichen Erdbeschleunigung eliminiert wird. Die Verwendung identischer oder zumindest gleichartiger Dynamometer gestattet mittelbar oder unmittelbar wirkende Temperatureinflüsse wie Längenänderungen oder Aenderungen elastischer
Eigenschaften auch zu eliminieren. Als Dynamometer werden beispielsweise Dehnungsmesstreifen, Schwingquarze und schwingende Saiten
verwendet.

In der anderen Gruppe sind die Geräte zu finden, bei denen die Gewichte der Referenzmasse und des Wägegutes in unterschiedlicher

Fall 132
Federüb.

Weise auf jeden Dynamometer wirken. An sich unlineare Zusammenhänge - wie z.B. Zuglast und Frequenz einer schwingenden Saite - können in bestimmten Fällen linearisiert werden.

Je nach dem verwendeten Dynamometer darf die Kraft, die direkt am Dynamometer angreift, die sog. Messkraft, nur in einem ganz bestimmten Grössenbereich liegen. Andernfalls würde entweder die geforderte Auflösung nicht erreicht, oder es müsste ein widerstandfähigerer und somit teuererer Dynamometer eingebaut werden. Daher werden die bekannten Dynamometer meist über Hebelwerke und/oder Seileck-Untersetzungen von der zu messenden Grösse beaufschlagt.

Sind die zu messenden Kräfte sehr viel grösser als die Messkraft, wie beispielsweise bei Fahrzeug- oder Kranwaagen, dann werden die Hebelwerke aufwendig und können wegen der erforderlichen Festigkeit oft nicht in der gebotenen Kompaktheit gebaut werden. Auch sind bestimmte Linearisierungsaufgaben, die sich wegen der verwendeten Dynamometer stellen, mit Hebelwerken nur bedingt und teilweise lösbar.

Die der Erfindung zugrunde liegende Aufgabe besteht darin, Mittel zu schaffen, welche kraftuntersetzende Hebelwerke in Massenmessgeräten teilweise oder ganz ersetzen und, falls erwünscht, auch zur Linearisierung von nichtlinearen Kennlinien über ein grosses Spektrum von Funktionen dienen können.

Diese Aufgabe wird erfindungsgemäss dadurch gelöst, dass zwischen dem Lastträger und dem Gestell eine Lastfeder und zwischen dem Lastträger und dem Krafteingang des Mess-Systems eine schwächere Messfeder angeordnet sind.

In der beiliegenden Zeichnung sind Ausführungsbeispiele des Erfindungsgegenstandes schematisch dargestellt. Es zeigen:

Fig. 1 und 2   je ein Ausführungsbeispiel mit ungekoppelten Dynamometern,

Fig. 3,4 und 5   je ein Ausführungsbeispiel mit gekoppelten Dynamometern,

Fig. 6   ein Ausführungsbeispiel für die Messung von Zuglasten,

Fig. 7   ein Ausführungsbeispiel für die Messung von grossen Lasten,

- 3 -

Fig. 8      eine Variante zu Fig. 7,

Fig. 9      ein Ausführungsbeispiel einer Kranwaage, und

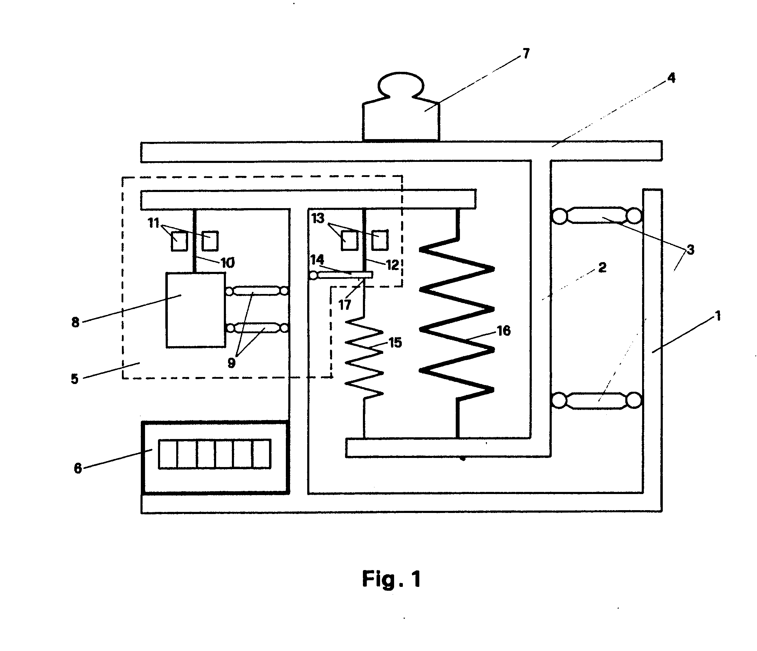

Das erste Ausführungsbeispiel gemäss Fig. 1 weist ein Gestell 1 und einen Lastträger 2 auf, der mittels zweier eine Parallelführung bildender Gelenkstäbe 3 mit dem Gestell 1 verbunden ist. Mit dem Lastträger 2 ist eine Waagplatte 4 fest verbunden. Der Massenmesser besteht aus einem - durch eine gestrichelte Linie eingefassten - Mess-System 5 und einer Auswertungs- und Anzeigevorrichtung 6. Dieser Massenmesser vergleicht das Gewicht des Wägegutes 7 mit dem Gewicht einer Referenzmasse 8, die mittels zweier Gelenkstäbe 9 mit dem Gestell 1 verbunden und parallel geführt ist und eine ebenfalls am Gestell 1 befestigte Saite 10 belastet. Die Saite 10 wird von einem Erreger-Kopf 11 zu Querschwingungen konstanter Frequenz angeregt; eine zweite Saite 12 ist auch am Gestell 1 befestigt und wird durch einen Erreger-Kopf 13 zu Querschwingungen angeregt. Das untere Ende der Saite 12 wird durch einen Lenker 14 geführt und von der Kraft einer Messfeder 15 belastet, die mit ihrem unteren Ende am Lastträger 2 befestigt ist. Der Angriffspunkt der Messfeder 15 am Lenker 14 wird Krafteingang 17 des Mess-Systems 5 genannt. Eine Lastfeder 16 ist zwischen Lastträger 2 und Gestell 1 eingespannt. Beide Federn sind Spiralfedern mit linearem Kraft-Weg-Verhältnis.

Wird die Waagplatte 4 von Wägegut 7 mit einer Kraft Ft belastet, so gilt:

$$Ft = F1 + F2 \tag{1}$$

$$s = \frac{Ft}{k1+k2} \tag{2}$$

wobei:

F1 = die Kraft, die die Messfeder 15 belastet,

F2 = die Kraft, die die Lastfeder 16 belastet,

k1 = die Federkonstante der Messfeder 15,

k2 = die Federkonstante der Lastfeder 16,

s  = die Verlängerung, die beide Federn unter der Wirkung der Kräfte F1 bzw. F2 erfahren.

Für die am Krafteingang 17 von der Messfeder 15 auf die Saite 12 aus-

- 4 -

geübte Kraft gilt:

$$F1 = s \cdot k1 \tag{3}$$

Setzt man (1) und (2) in (3), so ergibt sich:

$$F1 = Ft \cdot \left(\frac{k1}{k1 + k2}\right) \tag{4}$$

Aus Gleichung (4) geht hervor, dass die auf die Saite 12 wirkende Messkraft der Kraft Ft proportional ist und dass ihre Grösse durch geeignete Wahl der Federkonstanten k1 und k2 gewählt werden kann. Eine einfache Berechnung zeigt, dass das in Gleichung (4) angegebene Verhältnis in den für Waagen in Frage kommenden Temperaturbereichen auch temperaturunabhängig ist, sofern die beiden Federn aus den gleichen Werkstoffen bestehen.

Nicht dargestellt sind in Fig. 1 alle elektrischen Verbindungen vom Auswerte- und Anzeigegerät 6 zu den Saiten 10, 12.

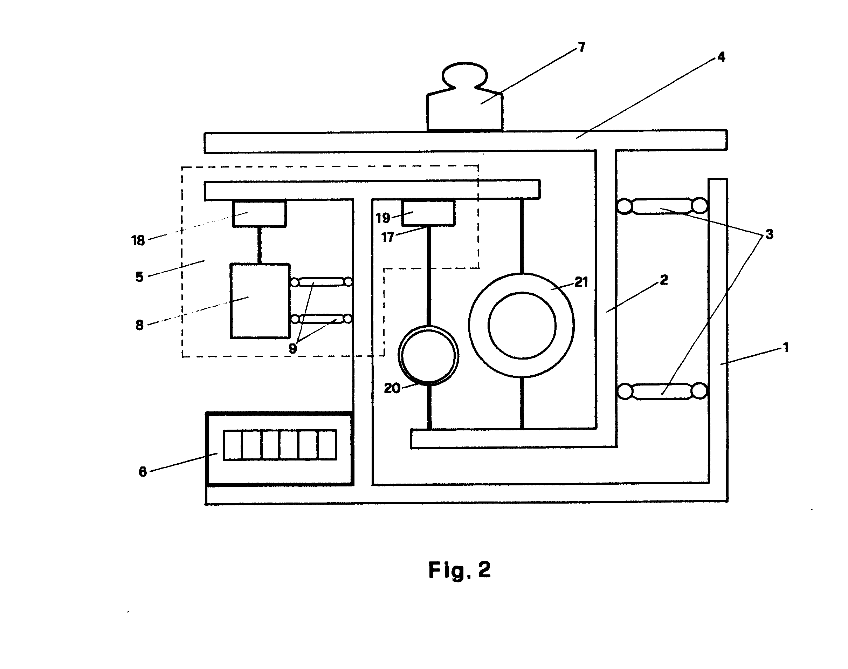

In Fig. 2 ist ein zweites Ausführungsbeispiel dargestellt, das sich von demjenigen der Fig. 1 dadurch unterscheidet, dass die Saiten 10, 12 durch Dehnungsmesstreifen 18 und 19 ersetzt sind und dass die Messfeder 20 und die Lastfeder 21 nicht mehr aus Spiralfedern sondern aus Ringfedern bestehen. Unter der Wirkung des Gewichtes des Wägegutes 7 werden diese Ringfedern gespannt, sie verformen sich, sodass sich der Lastträger 2 nach unten bewegt. Gleichzeitig übt die Messfeder 20 eine Kraft, die Messkraft, auf den Krafteingang 17 aus. Die Kennlinie dieser Ringfedern ist unlinear: bei zunehmender Belastung werden sie härter. Es ist durch passende Wahl dieser Kennlinien möglich, eine Unlinearität des Mess-Systems 5 zu kompensieren.

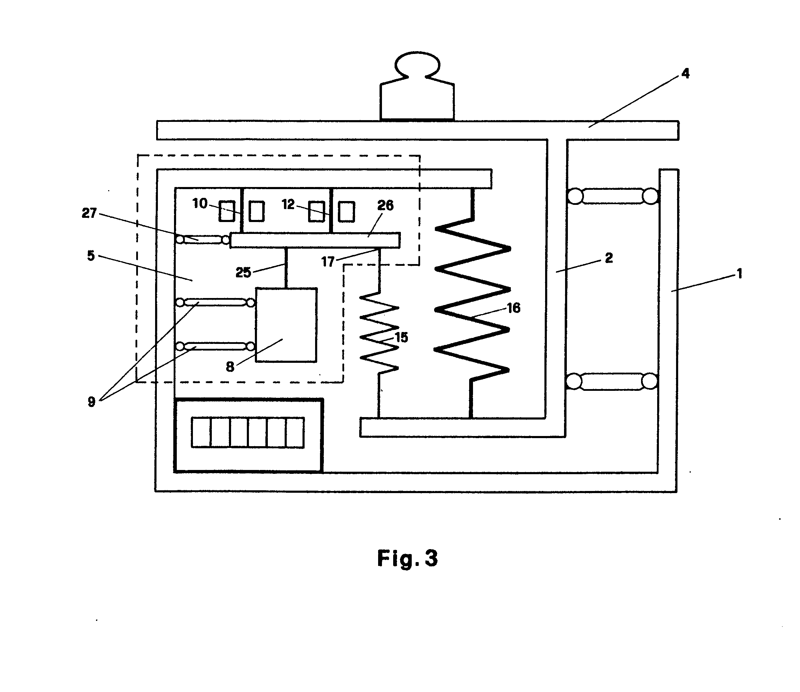

In Fig. 3 ist ein weiteres Ausführungsbeispiel, das demjenigen der Fig. 1 bis auf das Mess-System 5 entspricht, dargestellt. Die beiden Saiten 10, 12 sind an einem Kraftverteiler 26 angeschlossen, der von einem Lenker 27 waagrecht geführt ist. Die Referenzmasse 8 ist mittels eines Zugbandes 25 mit dem Kraftverteiler 26 verbunden. Das obere Ende des Zugbandes 25 ist am Kraftverteiler 26 in einem Punkt befestigt, der in der Mitte zwischen den Befestigungspunkten der Saiten 10, 12 liegt. Das Gewicht der Referenzmasse 8 erzeugt somit die gleiche Vorspannung in den beiden Saiten 10, 12. Hingegen ist der Krafteingang 17 bezüglich der Saiten 10, 12 asymmetrisch angeordnet, sodass die Messkraft die Saite 12 zusätzlich belastet, die Saite 10 aber entlastet. In der Auswertungs- und Anzeigevorrichtung 6 werden während einer vorgegebenen Anzahl von Schwingungen der Saite 10 die Schwingungen der Saite 12 gezählt, und aus dieser Zählung die Grösse der Masse des Wägegutes 7 ermittelt und dann angezeigt.

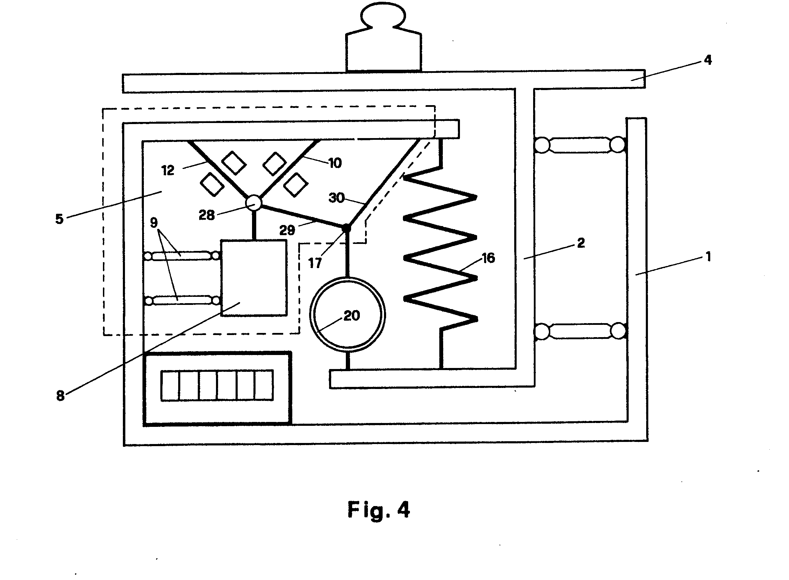

In dem Ausführungsbeispiel nach Fig. 4 wird als Lastfeder 16 eine Spiralfeder und als Messfeder 20 eine Ringfeder verwendet. Die Saiten 10, 12 sind nach bekannter Bauart V-förmig angeordnet. Ihr unteres Ende ist an einem Befestigungskopf 28 befestigt, an welchem die Referenzmasse 8 entlang der Winkelhalbierenden der von den Saiten 10, 12 eingeschlossenen Winkel wirkt. Die beiden Saiten 10, 12 sind also gleichmässig vorgespannt. Der Krafteingang 17 ist an einem Seileck 29, 30 angebracht. Die auf den Krafteingang 17 wirkende Messkraft wird über das Seileck 29, 30 untersetzt auf den Befestigungskopf 28 übertragen. Die auf die Saiten 10, 12 wirkende Kraft erhöht die Belastung der Saite 12 und vermindert diejenige der Saite 10. Durch Verstellung der das Seileck bildenden Zugbänder kann das Mass dieser Untersetzung eingestellt werden. Auch das in diesem Ausführungsbeispiel dargestellte Mess-System ist nicht absolut linear. Die verbleibende Unlinearität kann dank der als Messfeder 20 verwendeten Ringfeder kompensiert werden.

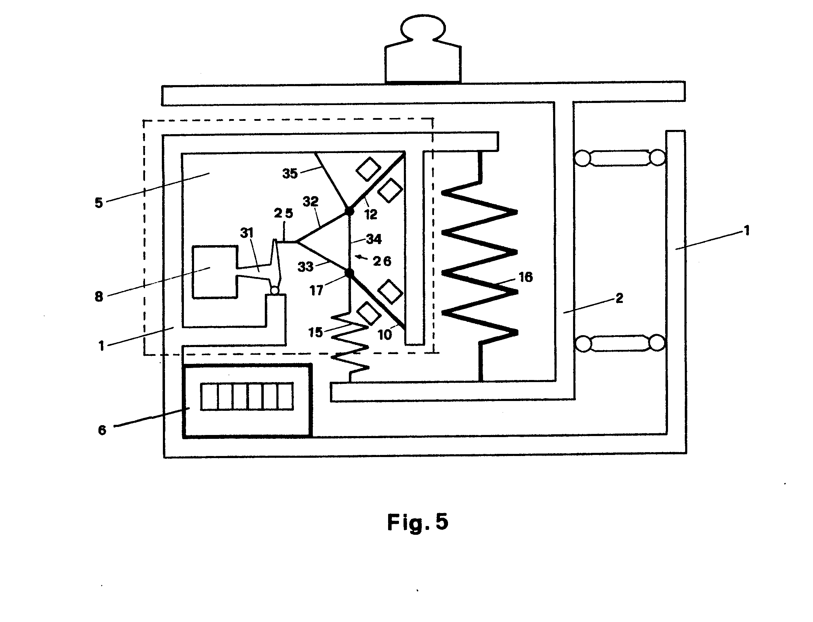

Im Ausführungsbeispiel nach Fig. 5 bestehen die Messfeder 15 und die Lastfeder 16 beide aus einer Spiralfeder. Die Saiten 10, 12 sind V-förmig angeordnet und an einem aus drei dreieckartig angeordneten Zugbändern 32, 33 34 bestehenden Kraftverteiler 26 befestigt. An einem Eckpunkt dieses Kraftverteilers 26 ist ein am Gestell 1 befestigter Lenker 35 angeschlossen. Ferner ist die Referenzmasse 8 an dem horizontalen Arm eines im Gestell 1 schwenkbar gelagerten Winkelhebels 31 angebracht, dessen vertikaler Arm mittels des Zugbandes 25 mit dem Kraftverteiler 26 verbunden ist.

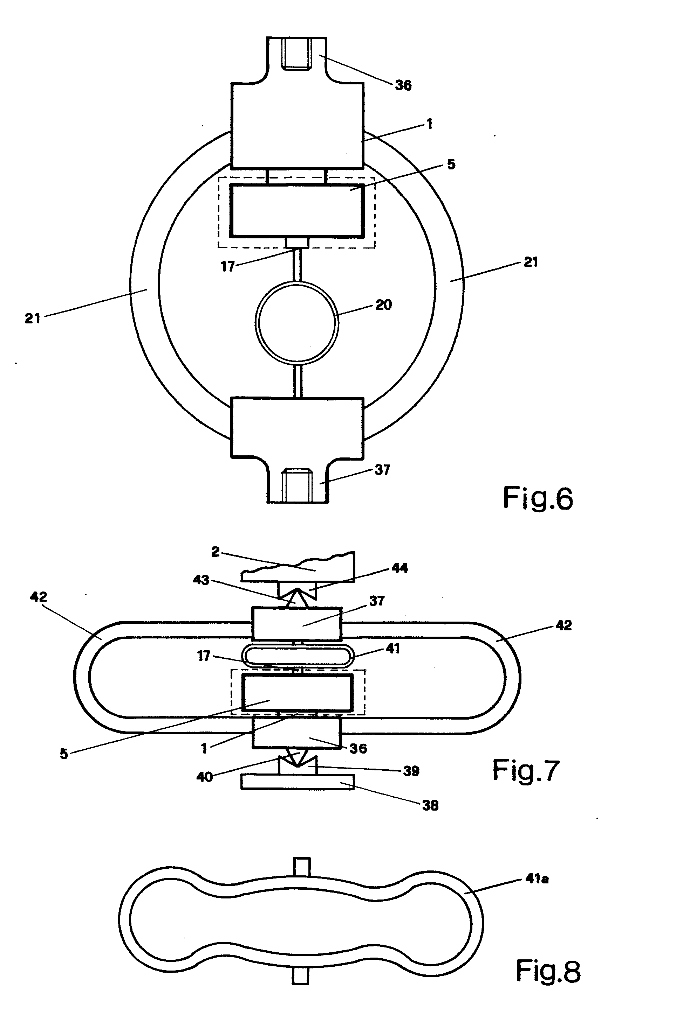

Das Ausführungsbeispiel nach Fig. 6 eignet sich für aufgehängte, d.h. als Zugkraft auftretende Lasten. Das Mess-System 5 ist an einer Befestigungsvorrichtung 36 angebracht, die an dem nicht dargestellten Gestell befestigt wird. Als Lastträger dient eine Befestigungsvorrichtung 37, an welcher die zu messende Last angebracht wird. Die Lastfeder 21 dient zur Aufhängung und Führung der Befestigungsvorrichtung 37, die hier die Funktion des Lastträgers übernimmt. Die Messfeder 20 ist zwischen dieser Befestigungsvorrichtung 37 und dem Mess-System 5 angeordnet. Die Messfeder 20 und die Lastfeder 21 bestehen aus Ringfedern.

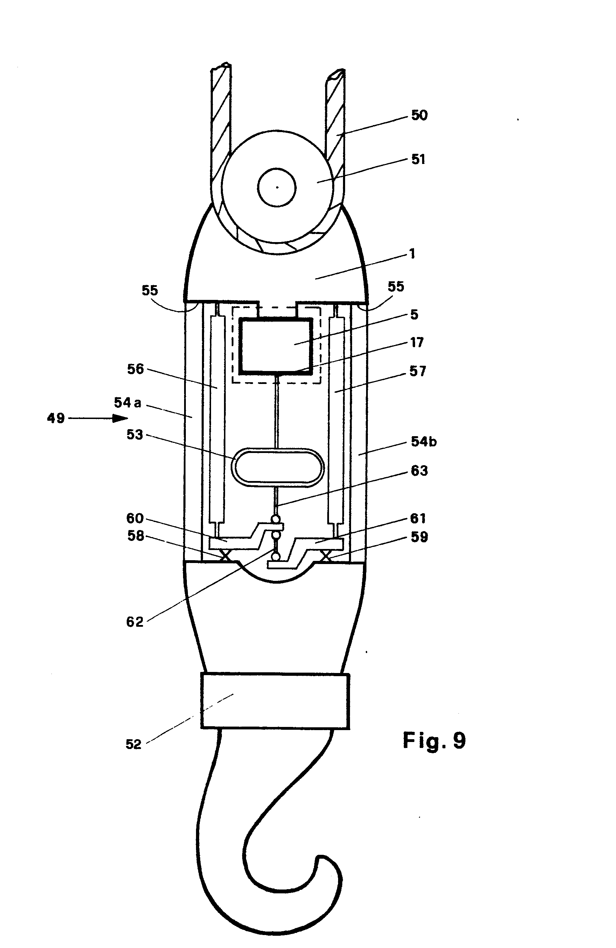

Das Ausführungsbeispiel nach Fig. 7 eignet sich für grosse, als Druckkraft auftretende Lasten. Auf einer schematisch dargestellten, als Gestell dienenden Bodenplatte 38 ist eine Pfanne 39 befestigt, in die eine an der Befestigungsvorrichtung 36 angebrachte Schneide 40 eingreift. Der ebenfalls schematisch dargestellte Lastträger 2 weist eine Pfanne 44 auf, in welche eine Schneide 43 der Befestigungsvorrichtung 37 eingreift. Die Messfeder 41 und die Lastfeder 42 bestehen beide aus einer abgeflachten Ringfeder. Auch in diesem Ausführungsbeispiel wird der Lastträger 2 von der Lastfeder 42 geführt. In Fig. 8 ist als Variante der Messfederausführung eine Messfeder 41a dargestellt, die aus zwei C-förmigen Teilen und zwei den wirkenden Kräften entgegengebogenen Teilen besteht. Durch geeignete Wahl der Krümmung dieser Teile kann die Kennlinie der Messfeder derart bestimmt werden, dass sie das unlineare Verhalten des Mess-Systems kompensiert.

Das Ausführungsbeispiel nach Fig. 9 ist eine schematisch dargestellte Kranwaage 49. Das Gestell 1 ist mit einer Rolle 51 versehen, über welche die ganze Kranwaage 49 an einem Seil 50 hängt. Der Lastträger ist von einem Kranhaken 52 gebildet. Die Lastfeder ist zweiteilig ausgeführt und besteht aus dem hartelastischen Zugkörpern 54a, 54b, die am Gestell 1 und am Kranhaken 52 befestigt sind. Das Mess-System 5 ist am Gestell 1 befestigt. Das Gestell 1 weist eine Schulterfläche 55 auf. Auf der oberen Seite des Kranhakens 52 sind bei 58 bzw. 59 zwei Hebel 60 bzw. 61 schwenkbar gelagert. Zwei Stelzen 56, 57 sind zwischen der Schulterfläche 55 und den einen Enden dieser Hebel 60, 61 angeordnet. Die Enden der längeren Arme dieser Hebel 60, 61 sind mittels eines Zwischenstückes 62 gelenkig verbunden. Ein Zugband 63 verbindet das Ende des längeren Armes des Hebels 60 mit der Messfeder 53, die andererseits mit dem Krafteingang 17 verbunden ist.

Wird der Kranhaken 52 belastet, so wird die zweiteilige Lastfeder 54a, 54b auf Zug beansprucht und die entsprechende Bewegung des Lasthakens 52 wird über die Hebel 60, 61, die Stelzen 56, 57 und das Zugband 63 übersetzt auf die Messfeder 53 übertragen, die ihrerseits eine entsprechende, auf den Krafteingang 17 wirkende Kraft erzeugt.

In allen Ausführungen der Erfindung soll die Lastfeder vorzugsweise mindestens 10 Mal stärker als die Messfeder sein. Sie kann aber auch viel stärker, z.B. 10 000 Mal, als die Messfeder sein.

In den Ausführungsbeispielen ist nur von einer Referenzmasse zur Erzeugung der Vorspannung des einen oder beider Dynamometer die Rede, es versteht sich, dass sie in bekannter Weise durch eine Feder ersetzt werden könnte.

Die Bewegung des Lastträgers unter der Wirkung der zu messenden Grösse, Masse oder Kraft, ist sehr klein. Sie kann von 0,01 mm bis höchstens 1 mm betragen.

PATENTANSPRUCH

Massen- und Kraftmesser mit einem Gestell, einem Lastträger und einem zwei Dynamometer, eine Referenzgrösse und einen Krafteingang aufweisenden Mess-System, dadurch gekennzeichnet, dass zwischen dem Lastträger und dem Gestell eine Lastfeder und zwischen dem Lastträger und dem Krafteingang des Mess-Systems eine schwächere Messfeder angeordnet sind.

Fig. 1

Fig. 2

**Fig. 3**

4/7

Fig. 4

**Fig. 5**

0003473

Fig.6

Fig.7

Fig.8

Fig. 9

0003473

<table>
<tr><td colspan="2" align="center">Europäisches Patentamt</td><td align="center">**EUROPÄISCHER RECHERCHENBERICHT**</td><td>Nummer der Anmeldung<br>EP 78 10 1647</td></tr>
</table>

| | **EINSCHLÄGIGE DOKUMENTE** | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| X | ANALYTICAL CHEMISTRY, Vol. 48, Nr. 11, September 1976, Columbus, Ohio, USA, R.O. LEONARD: "Instrumentation - Electronic Laboratory Balances", Seiten 879A,880A,884A,886A,890A, 892A,894A<br><br>* Seite 890A; Figur 8 *<br><br>-- | 1 | G 01 G 3/16<br>G 01 L 1/10 |
| X | CH - A - 552 799 (METTLER INSTRU-MENTE AG)<br><br>* Spalte 2, Zeilen 42-61; Figur 1 *<br><br>-- | 1 | RECHERCHIERTE SACHGEBIETE (Int. Cl.²) |
| X | CH - A - 553 296 (METTLER INSTRU-MENTE AG)<br><br>* Spalte 5, Zeilen 23-40; Figuren 3,4 *<br><br>-- | 1 | G 01 G 3/16<br>G 01 L 1/10<br>G 01 P 15/10 |
| | CH - A - 573 103 (WIRTH, GALLO & CO.)<br><br>* Figur 1 *<br><br>---- | 1 | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent-familie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 10-05-1979 | VAN ASSCHE |

EPA form 1503.1 06.78